Europäisches Patentamt

European Patent Office

Office européen des brevets

(11) Veröffentlichungsnummer: **0 255 922**
**A2**

(12) **EUROPÄISCHE PATENTANMELDUNG**

(21) Anmeldenummer: 87111085.4

(22) Anmeldetag: 31.07.87

(51) Int. Cl.⁴: **F02F 3/04** , F16J 1/12

(30) Priorität: 05.08.86 DE 3626436

(43) Veröffentlichungstag der Anmeldung:
**17.02.88 Patentblatt 88/07**

(84) Benannte Vertragsstaaten:
**DE ES FR GB IT SE**

(71) Anmelder: BAYERISCHE MOTOREN WERKE
Aktiengesellschaft
Postfach 40 02 40 Petuelring 130 - AJ-30
D-8000 München 40(DE)

(72) Erfinder: Feustel, Thomas
Valerystrasse 30
D-8044 Unterschleissheim(DE)

(74) Vertreter: Bücken, Helmut
Bayerische Motoren Werke
Aktiengesellschaft Postfach 40 02 40
Petuelring 130 - AJ-30
D-8000 München 40(DE)

(54) **Kolben.**

(57) Es wird ein Leichtmetallkolben mit extrem kurz ausgebildetem Kolbenschaft vorgeschlagen, wobei in den Kolbenkopf ein Verstärkungselement aus Stahl eingegossen ist. An diesem Verstärkungselement ist mittels Schweißung zentral ein bolzenförmiges Anlenkelement zur Aufnahme des Pleuels angebracht. Diese Maßnahmen reduzieren das Kolbengewicht erheblich.

Fig. 1
(A-A)

EP 0 255 922 A2

# Kolben

Die Erfindung bezieht sich auf einen Kolben der im Oberbegriff des ersten Anspruchs angegebenen Art und geht aus von der gattungsbildenden DE-AS 21 51 184.

Ein wesentliches Ziel in der Entwicklung von Kolben für Brennkraftmaschinen ist die Reduzierung des Kolbengewichtes, um die durch die oszillierende Kolbenbewegung hervorgerufenen Massenkräfte gering zu halten. Eine Maßnahme hierzu ist in der zentralen Anlenkung des Pleuels zu sehen, denn damit kann der Kolbenschaft äußerst kurz gestaltet werden. In der DE-AS 21 51 184 ist ein derartiger Kolben dargestellt. Bei dieser Anordnung ist ein langes Kolbenhemd, wie es beispielsweise in der DE-PS 26 36 112 gezeigt wird, nicht mehr erforderlich, denn dieses dient zum einen zur Aufnahme eines Kolbenbolzens, an welchem das Pleuel angebunden ist, zum anderen soll ein mögliches Verklemmen des Kolbens im Zylinder - verursacht durch die außermittige Krafteinleitung -verhindert werden. Bei mittiger Pleuelanlenkung entfällt jedoch der lange Kolbenbolzen und die Gefahr des Verklemmens wird durch die ebenfalls mittige Kraftübertragung deutlich verringert. Die Kolbenführung übernimmt somit im wesentlichen nur der Feuersteg und der sich daran anschließenden Kolbenringbereich.

Eine weitere Maßnahme zur Reduzierung des Kolbengewichts ist die Verwendung von Leichtmetall als Kolbenmaterial. Aus der DE-OS 34 46 121 ist bereits ein extrem flach bauender Kolben bekannt geworden, der zur Anlenkung des Pleuels allerdings wieder mit einem sich über den gesamten Durchmesser erstreckenden Kolbenbolzen versehen ist. Dieser erhöht wiederum das Gewicht jenes Kolbens. Auch sind aufwendige Maßnahmen zur Abdichtung gegenüber der Zylinderwand und zur Vermeidung des Kolbenklemmens erforderlich. Dazu ist auch unterhalb des Kolbenbolzens ein Kolbenring angeordnet, womit sich jedoch die Notwendigkeit ergibt, den Bolzen im Kolben gasdicht zu lagern.

Die an sich gewichtsreduzierende Anordnung gemäß der gattungsbildenden Schrift kann dagegen aufgrund mechanischer und thermischer Probleme nicht einfach in Leichtmetall ausgeführt werden, denn die bei zentraler Pleuelanlenkung nur an einem Punkt erfolgende Kraftübertragung würde einen Leichtmetallkolben in unzulässig hoher Weise mechanisch belasten. Daneben würden auch thermische Probleme auftreten, denn bei einem derartigen Kolben steht keine ausreichende Fläche zur Abgabe der auf den Kolbenkopf auftreffenden Wärmemenge zur Verfügung. Die Wärmedehnung des Kolbens überstiege somit den im Hinblick auf unterschiedliche Betriebstemperaturen der Brennkraftmaschine noch tolerierbaren Grenzwert.

Aufgabe der vorliegenden Erfindung ist es, einen Kolben der im Oberbegriff des ersten Anspruchs angegebenen Art mit deutlich reduziertem Gewicht bereitzustellen.

Diese Aufgabe wird durch die kennzeichnenden Merkmale des ersten Anspruchs gelöst. Die Verwendung von Leichtmetall als Kolbenmaterial führt zu einer deutlichen Gewichtsersparnis. Zur Lösung der oben geschilderten mechanischen und thermischen Probleme ist ein verstärkender Metalleinsatz vorgesehen, welcher ein Anlenkelement zur Aufnahme des Pleuels trägt. Zwar sind auch aus der bereits oben erwähnten DE-PS 26 36 112 oder der DE-AS 10 12 120 Leichtmetallkolben mit Metalleinsätzen bekannt, jedoch dienen diese entweder nur zur Regelung der Wärmeausdehnung oder zur Wärmeabfuhr, tragen jedoch in keinem Falle ein Anlenkelement für eine Pleuelstange.

Daneben zeigt zwar auch die DE-AS 12 94 739 einen Kolben mit einem Metalleinsatz und einem damit verbundenen Anlenkelement für ein Pleuel, hierbei dient jedoch dieses Anlenkelement nur zur zusätzlichen Abstützung eines Kolbenbolzens, welcher in an sich sonst bekannter Weise im Kolbenhemd gelagert ist.

Weist der Metalleinsatz gemäß Anspruch 2 einen niedrigeren Wärmeausdehnungskoeffizienten als das zur Gestaltung des Kolbens verwendete Leichtmetall auf, so erfüllt dieser Metalleinsatz neben der Kraftübertragung zwischen Kolben und Pleuel die zusätliche Aufgabe, die thermische Ausdehnung des Leichtmetalls zu reduzieren bzw. eine bevorzugte Ausdehnungsrichtung festzuschreiben.

Anspruch 3 beschreibt eine vorteilhafte Einfügung des Metalleinsatzes in den Leichtmetallkolben. Wird der Metalleinsatz alfiniert eingegossen, so ist aufgrund des schichtweisen Übergangs vom Metall zum Leichtmetall, beispielsweise von Stahl zu einer Aluminiumlegierung ein optimaler Verbund zwischen Metalleinsatz und Leichtmetallkolben über die sich durch das Alfinieren bildenden Zwischenschichten gewährleistet.

Die Ansprüche 4 und 5 behandeln vorteilhafte Ausgestaltungen des Metalleinsatzes. Die Anordnung im Kolbenboden erhöht dessen Steifigkeit, und ein umlaufendes Metallband schirmt die Kolbenringnuten gegenüber unzulässig hohen Temperaturen, welche an Brennkraftmaschinen auf den Kolbenboden einwirken, ab. Eine einfache Fertigungsweise des Metalleinsatzes ist in der Verschweißung von sich kreuzenden Metallstreifen, vorzugsweise aus Stahlblech, zu sehen.

An den Metalleinsatz ist das Anlenkelement für das Pleuel gemäß Anspruch 6 vorteilhafterweise über eine Schweißverbindung angebunden. Dies ist deutlich leichter und einfacher als die in der gattungsbildenden Schrift gezeigte Schraubverbindung. Der Schweißvorgang erfolgt dabei vor dem Alfinieren und Eingießen des Metalleinsatzes in den Leichtmetallkolben, um auch im Bereich zwischen Metalleinsatz und Anlenkelement eine optimale Verbindung zum Kolben herzustellen.

Die Ansprüche 7 und 8 beschreiben vorteilhafte Ausgestaltungen des Anlenkelementes. Weist das Anlenkelement im wesentlichen Bolzenform auf, so kann auf die Verwendung eines separaten Kolbenbolzens verzichtet werden; vielmehr wird eine direkte Pleuellagerung ermöglicht. Zur Anbindung des Anlenkelementes an den Metalleinsatz muß dieses beispielsweise mit einem Zapfen versehen sein, welcher mit dem Anlenkelement ebenfalls über eine Schweißverbindung verbunden sein kann. Eine doppel-T-förmige Ausbildung kommt dabei dem zu übertragenden Kraftfluß mechanisch optimal entgegen und bietet eine weitere Möglichkeit zur Gewichtsreduzierung.

Im folgenden wird die Erfindung anhand eines bevorzugten Ausführungsbeispiels näher beschrieben. Es zeigt:

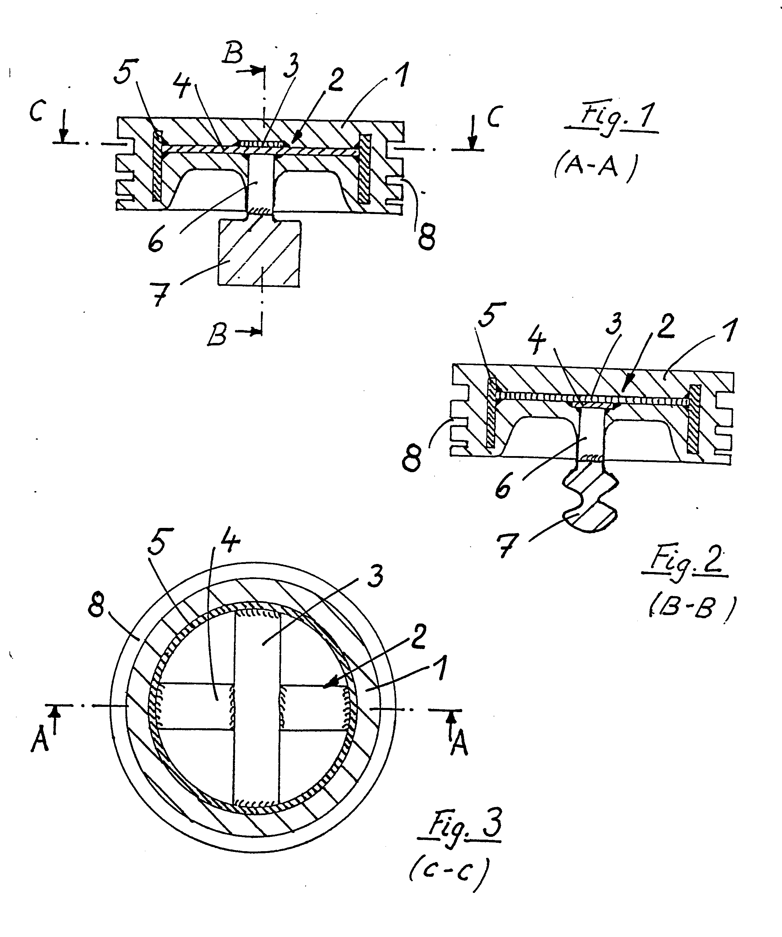

Fig. 1 einen Schnitt durch einen erfindungsgemäßen Kolben längs der Linie A-A aus Fig. 3 und

Fig. 2 den Schnitt durch den Kolben längs der Linie B-B in Fig. 1 und

Fig. 3 den Schnitt durch den Kolben längs der Linie C-C in Fig. 1.

Der dargestellte Leichtmetallkolben besteht im wesentlichen aus dem Kolbenkopf 1 und einem Stahlgerüst 2. Dieses baut sich auf aus den sich kreuzenden Stahlstreifen 3 und 4 sowie dem die Enden der Stahlstreifen tangierenden Stahlring 5. Ferner trägt das Stahlgerüst 2 den mittig angeordneten Zapfen 6, sowie das daran befestigte Anlenkelement 7 zur Aufnahme des Pleuels. Die Stahlstreifen 2 und 3 sowie der Stahlring 4 sind miteinander verschweißt und in den aus Leichtmetall gefertigten Kolbenkopf 1 eingegossen Der Kolbenkopf 1 ist in bekannter Weise mit mehreren Ringnuten 8 zur Aufnahme von Kolbenringen versehen.

Das Stahlgerüst 2 erfüllt dabei die folgenden Aufgaben:
- Regelung der thermischen Ausdehnung des Kolbenkopfes 1
- Abschirmung der Ringnuten 8 gegenüber den auf den Kolbenkopf einwirkenden hohen Temperaturen
- Erhöhung der Steifigkeit des Kolbenkopfes 1
- Anbindung des Anlenkelementes 7 bzw. des Pleuels.

Ein derartiger Kolben kann dabei folgendermaßen hergestellt werden: Der Metalleinsatz, bestehend aus einzelnen Stahlblechstreifen, wird zunächst miteinander verschweißt. Das Anlenkelement 7, beispielsweise gefertigt aus 15Cr3 wird mit dem Zapfen 6 mittels Reibschweißen, Elektronenstahlschweißen oder Laserstrahlschweißen verbunden. Die als Lagerfläche für das Pleuel dienende Oberfläche des Anlenkelementes 7 muß geschliffen sein. Vor dem Eingießen in den Kolbenkopf 1, welcher aus einer Aluminium-Legierung gefertigt ist, wird das Stahlgerüst 2 alfiniert.

## Ansprüche

1. Kolben, insbesondere für eine Brennkraftmaschine, mit einem unterhalb des Kolbenbodens mit Abstand vom Kolbenschaft zentral angeordnetem Anlenkelement für eine Pleuelstange, wobei der Kolbenschaft im wesentlichen nur aus dem sich an den Kolbenboden direkt anschließenden Kolbenringbereich besteht, dadurch gekennzeichnet, daß der Kolben aus Leichtmetall gefertigt und mit einem verstärkenden Metalleinsatz (2) versehen ist, an welchem das Anlenkelement (7) angebunden ist.

2. Kolben nach Anspruch 1, dadurch gekennzeichnet, daß der Metalleinsatz (2) einen niedrigeren Wärmeausdehnungskoeffizienten aufweist, als das Leichtmetall.

3. Kolben nach Anspruch 1 oder 2, dadurch gekennzeichnet, daß der Metalleinsatz (2) alfiniert eingegossen ist.

4. Kolben nach einem der vorangegangenen Ansprüche, dadurch gekennzeichnet, daß der Metalleinsatz (2) im Kolbenboden aus mindestens zwei sich kreuzenden und mit einander verschweißten Metallstreifen (3,4) besteht.

5. Kolben nach Anspruch 4, dadurch gekennzeichnet, daß die Metallstreifen (3,4) an ihren Enden mit einem ebenfalls im Kolbenboden eingegossenen ringförmig umlaufenden Metallband (5) verschweißt sind.

6. Kolben nach einem der vorangegangenen Ansprüche, dadurch gekennzeichnet, daß das Anlenkelement (7) mit dem Metalleinsatz (2) verschweißt ist.

7. Kolben nach einem der vorangegangenen Ansprüche, dadurch gekennzeichnet, daß das Anlenkelement (7) bolzenförmig ausgebildet und an seiner dem Kolbenboden zugewandten Mantelfläche mit einem Zapfen (6) versehen ist.

8. Kolben nach einem der vorangegangenen Ansprüche, dadurch gekennzeichnet, daß das Anlenkelement (7) doppel-T-förmig ausgebildet und an seiner dem Kolbenboden zugewandten Mantelfläche mit einem Zapfen (6) versehen ist.

Fig. 1
(A-A)

Fig. 2
(B-B)

Fig. 3
(C-C)